Europäisches Patentamt

European Patent Office

Office européen des brevets

(11) Veröffentlichungsnummer: **0 194 414 B1**

# EUROPÄISCHE PATENTSCHRIFT

(45) Veröffentlichungstag der Patentschrift: 26.06.91

(51) Int. Cl.5: **H02M 3/335**

(21) Anmeldenummer: **86100530.4**

(22) Anmeldetag: **17.01.86**

(54) Gleichspannungswandler mit mehreren geregelten Ausgängen.

(30) Priorität: **13.03.85 DE 3508895**

(43) Veröffentlichungstag der Anmeldung:
**17.09.86 Patentblatt 86/38**

(45) Bekanntmachung des Hinweises auf die
Patenterteilung:
**26.06.91 Patentblatt 91/26**

(84) Benannte Vertragsstaaten:
**DE FR GB IT NL**

(56) Entgegenhaltungen:
**FR-A- 2 354 659**
**US-A- 4 323 961**

(73) Patentinhaber: **ANT Nachrichtentechnik GmbH**
**Gerberstrasse 33**
**W-7150 Backnang(DE)**

(72) Erfinder: **Grünsch, Eckhardt**
**Ernst-Wecker-Strasse 10**
**W-7173 Mainhardt(DE)**

## Beschreibung

Die Erfindung betrifft einen Gleichspannungswandler gemäß dem Oberbegriff des Patentanspruchs 1. Ein solcher Gleichspannungswandler ist bekannt aus EP 27 015 B1. Bei dem Gleichspannungswandler gemäß EP 27 015 B1 ist ein freilaufender Oszillator vorgesehen, der die Ein- und Ausschaltzeit des Schalttransistors bestimmt. Zur Regelung der Ausgangsspannung sind mehrere Regelschleifen vorgesehen, die unter anderem die Pulswiederholungsrate des Oszillators sowie die Höhe des Energieaufnahmestromes bestimmen.

Aus der US-A-4,323,961 ist ein Gleichspannungswandler mit einem geregelten und einem mitlaufenden Ausgang bekannt. Dieser Gleichspannungswandler weist einen Transformator auf. Der Schalttransistor des Gleichspannungswandlers ist im Primärstromkreis dieses Transformators angeordnet. Sekundärstromkreise des Transformators führen zu dem geregelten bzw. mitlaufenden Ausgang. Ein Regelkreis bestimmt die Abschaltung des primärseitigen Energieaufnahmestroms in Abhängigkeit der Höhe der Ausgangsspannung. Ein zweiter, vom ersten unabhängiger Regelkreis schaltet den Schalttransistor ab, wenn der primärseitige Energieaufnahmestrom einen vorgegebenen Wert überschreitet. Ein weiterer Regelkreis bewirkt ein Abschalten des Schalttransistors, wenn die Ausgangsspannung einen vorbestimmten Schwellwert unterschreitet.

Aufgabe der Erfindung ist es, den Gleichspannungswandler gemäß Oberbegriff des Patentanspruch 1 anzugeben, welcher bei einem geregelten und mindestens einem mitlaufenden Wandlerausgang günstige Mitlaufeigenschaften aufweist. Insbesondere soll der Gleichspannungswandler ebenso günstige Mitlaufeigenschaften aufweisen wie ein Gleichspannungswandler mit Konstantfrequenzbetrieb und Pulsbreitenregelung.

Diese Aufgabe wird durch die kennzeichnenden Merkmale des Patentanspruchs 1 gelöst. Anspruch 2 gibt eine vorteilhafte Ausgestaltung der Erfindung an.

Der Gleichspannungswandler nach der Erfindung läßt sich vorteilhaft als Kleinleistungswandler mit hohen Lastwechseln verwenden und ist daher für Stromversorgungen in ISDN-Netzen besonders geeignet. Der Gleichspannungswandler gemäß der Erfindung weist bezüglich reinen freischwingenden Wandlern den Vorteil einer kleineren Ruheleistung auf und bezüglich reinen pulsbreitenmodulierten Wandlern den Vorteil geringerer Schaltverluste. Im ISDN-Netz muß insbesondere bei Leistungen von etwa 20 mW und Eingangsspannungsschwankungen zwischen 30 und 100 V ein hoher Wirkungsgrad erreicht werden. Diese Forderung erfüllt der Wandler nach der Erfindung optimal.

Ein Ausführungsbeispiel der Erfindung wird nun anhand der Zeichnungen näher erläutert. Es zeigen

Fig. 1 einen Stromlaufplan des Gleichspannungswandlers,

Fig. 2 Spannungs- und Stromverläufe.

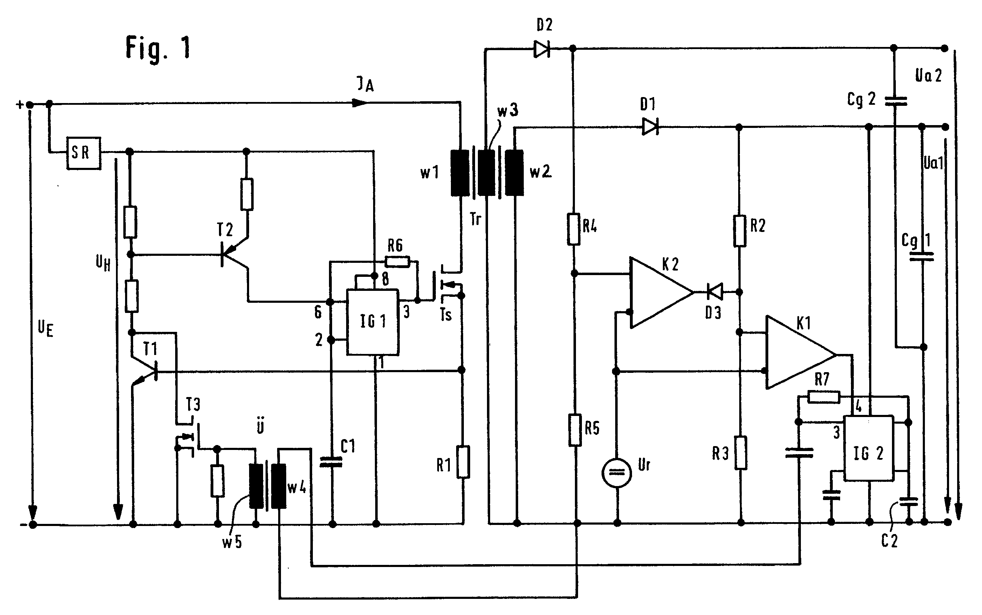

Wie Fig. 1 zeigt, liegt die Eingangsspannung $U_E$ des Gleichspannungswandlers in Serie zur Primärwicklung w1 des Wandlertransformators Tr, der Schaltstrecke des Schalttransistors Ts und dem Strommeßwiderstand R1 . Der Gleichspannungswandler weist zwei Ausgänge auf, an denen die Ausgangsspannungen Ua1 und Ua2 abgenommen werden können. Der erste Ausgang erhält seine Spannung über die erste Sekundärwicklung w2 des Transformators Tr, die Diode D1 und den ausgangsseitigen Glättungskondensator Cg1; der zweite Ausgang über die zweite Sekundärwicklung w3, die Diode D2 und den ausgangsseitigen Glättungskondensator Cg2. Die Dioden D1 und D2 sind derart an die Sekundärwicklungen w2 und w3 angeschlossen, daß der Wandler als Sperrwandler arbeitet. Die Einschalt-/-Ausschaltzeiten des Schalttransistors Ts werden vom Impulsgenerator IG1 gesteuert. Führt dessen Ausgang Pin 3 High-Potential, ist der Schalttransistor Ts, in Fig. 1 als FET dargestellt, eingeschaltet. Führt der Ausgang Pin 3 des Impulsgenerators IG1 demgegenüber Low-Potential , ist der Schalttransistor Ts abgeschaltet, Der Impulsgenerator IG1, der durch den Timer - IG 7555 realisiert werden kann, ist vom freischwingenden Typ, wobei seine Frequenz durch den Widerstand R6 zwischen Pin 6 und 3 und den Kondensator C1 zwischen Pin 2 und der Verbindung Strommeßwiderstand R1 / Eingangsspannung $U_E$ bestimmt ist. Der an sich freischwingende Impulsgenerator IG1 wird jedoch über extern zugeführte Blockier- bzw. Entblockiersignale über den mit Pin 2 verbundenen Pin 6 in seiner Impulswiederholfrequenz gesteuert. Diese Steuerung erfolgt, wie anschließend noch genauer beschrieben wird, in Abhängigkeit der Höhe des Energieaufnahmestroms des Wandlers und in Abhängigkeit der Höhe der Ausgangsspannungen Ua1 und Ua2. Ohne die Zuführung der externen Blockiersignale würde der Impulsgenerator IG1 mit der Frequenz, die durch seine frequenzbestimmenden Elemente R6 und C1 festgelegt ist, arbeiten. Die Gleichspannungsversorgung des Impulsgenerators IG1 erfolgt über einen an der Eingangsspannung $U_E$ betriebenen Spannungsregler SR. Dazu ist Pin 8 des Impulsgenerators IG1 mit dem Ausgang des Spannungsregler SR verbunden und Pin 1 mit dem Minuspotential der Eingangsspannung $U_E$. Beide Transistoren T1 und T2 werden ebenfalls über den Spannungsregler SR gleichspannungsversorgt.

Zur Beeinflussung des Impulsgenerators IG1 in Abhängigkeit vom Energieaufnahmestrom wird der durch den Energieaufnahmestrom verursachte Spannungsabfall am Strommeßwiderstand R1 ausgewertet. Unter einem bestimmten Schwellwert fließt der Energieaufnahmestrom $J_A$, da der Ausgang 3 des Impulsgenerators IG1 High-Potential führt. Übersteigt der Spannungsabfall an R1 einen vorgegebenen Schwellwert, so schaltet der Transistor T1 durch, was wiederum dazu führt, daß auch der dem Transistor T1 nachgeschaltete Transistor T2 durchschaltet. Wenn der Transistor T2 durchgeschaltet ist, kann der Kondensator C1 über die Hilfsspannung $U_H$ aufgeladen werden. Die Transistoren T1, T2 und der Widerstand R1 sind also jene Schaltmittel - Schaltmittel zweiter Art -, die zur Beeinflussung der Abschaltung des primärstromkreisseitigen Energieaufnahmestroms dienen. Sobald der Kondensator C1 den Wert von etwa 2/3 der Höhe der Hilfsspannung $U_H$ erreicht hat, springt das Potential am Ausgang 3 des Impulsgenerators IG1 auf Low-Potential und der Schalttransistor Ts schaltet ab. Der Kondensator C1 wird nun über den Widerstand R6 entladen.

Sobald sich der Kondensator C1 etwa auf eine Spannung von 1/3 der Hilfsspannung $U_H$ entladen hat, springt der Ausgang Pin 3 des Impulsgenerators IG1 auf High-Potential und schaltet den Schalttransistor Ts wieder ein, und die Energieaufnahmephase beginnt von neuem. Ohne weitere Beeinflussung seines Eingangs 6 würde der Impulsgenerator IG1 nun ständig solche Einschaltimpulse an den Schalttransistor Ts liefern, und zwar mit einer Wiederholfrequenz, die durch die Zeitkonstante $R_6$ C1 bestimmt ist. Diese Wiederholfrequenz entspricht der maximal möglichen Arbeitsfrequenz des Wandlers, die im Kurzschlußfall bei maximaler sekundärseitiger Belastung mindestens eines Ausgangs auftritt. In allen anderen Betriebsfällen wird diese Wiederholfrequenz vermindert, und zwar in Abhängigkeit der Höhe der Ausgangsspannungen Ua1 und Ua2.

Für die Beeinflussung der Wiederholfrequenz des Impulsgenerators IG1 in Abhängigkeit der Belastung der jeweiligen Ausgänge ist eine zweite Regelschleife vorgesehen, umfassend die beiden Komparatoren K1, K2 mit zugeordneten Spannungsteilerwiderständen R2, R3; R4, R5 und Referenzspannungsquelle Ur, weiterem Impulsgenerator IG2, Übertrager Ü und Transistor T3. Die frequenzbestimmenden Elemente des Impulsgenerators IG1 in Abhängigkeit der Ausgangsspannung Ua1 sind Schaltmittel erster Art (R1, R2, K1, IG2, Ü, T2, C1, R5). Wenn während der Energieabgabephase des Wandlers die Ausgangsspannungen Ua1 des ersten Ausgangs einen vorgegebenen Wert überschreitet, wird der Spannungsabfall am Widerstand R3 des Spannungsteilers R2, R3 größer als die Referenzspannung der Referenzspannungsquelle Ur und der Impulsgenerator IG2, der wiederum durch einen Timer IG 7553 realisiert werden kann, wird vom Ausgang des Komparators K1 über seinen Eingang, Pin 4, in Betrieb gesetzt, d.h. an seinem Ausgang, Pin 3, entstehen Pulse. Die Wiederholfrequenz dieser Impulse wird durch die frequenzbestimmenden Elemente - Widerstand R7 und Kondensator C2 - des Impulsgenerators IG2 festgelegt. Im Gegensatz zum Impulsgenerator IG1 wird der Impulsgenerator IG2 mit konstanter Pulswiederholfrequenz betrieben. Außerdem wird die Ausgangsspannung Ua2 des zweiten Ausgangs überwacht. Wenn diese Ausgangsspannung Ua2 einen vorgegebenen Wert überschreitet, wird der Spannungsabfall am Widerstand R5 des Spannungsteilers R4, R5 größer als die Referenzspannung der Referenzspannungsquelle Ur und der Impulsgenerator IG2 wird in Betrieb gesetzt. Die Komparatoren K1 und K2 sind derart zusammengeschaltet, daß der Impulsgenerator IG2 immer über jenen Komparator in Betrieb gesetzt wird, dessen zugehörige Ausgangsspannung zuerst den vorgegebenen Wert unterschreitet. Dabei ist der Ausgang des Komparators K1 unmittelbar an den Eingang des Impulsgenerators IG2 angeschlossen und der Ausgang des Komparators K2 mittelbar über den Komparator K1; d.h. sein Ausgang ist über die Entkoppeldiode D3 mit dem Signaleingang des Komparators K1 verbunden. Das Ausgangssignal des Komparators K2 beeinflußt die Spannungsverteilung am Spannungsteiler R2, R3 des Komparators K1 derart, daß sein Steuersignal zur Inbetriebsetzung des Impulsgenerators IG2 auch am Ausgang des Komparators K1 erscheint. Die Ausgangsimpulse des Impulsgenerators IG2 im Sekundärkreis des Wandlers werden galvanisch getrennt mittels Überträger Ü mit Primärwicklung w4 und Sekundärwicklung w5 in den Primärkreis des Wandlers übertragen. Die Sekundärwicklung w5 des Übertragers Ü ist zwischen Gate- und Sourceelektrode des FET T3 angeschlossen. Bei Auftreten der Ausgangsimpulse des Impulsgenerators IG2 wird FET T3 pulsweise leitend gesteuert und ebenso der Transistor T2, dessen Basisanschluß über einen Widerstand mit dem Drain-Anschluß des FET T3 verbunden ist. Bei pulsweise leitend gesteuertem Transistor T2 erhält der Impulsgenerator IG1 ein Blockiersignal in der Form, daß der Kondensator C1 über die Schaltstrecke des Transistors T2 pulsweise nachgeladen wird, die Freigabeschaltschwelle von 1/3 $U_H$ nicht erreichen kann, und so den Impulsgenerator IG1 am Einschalten des Schalttransistors TS hindert. Je länger also einer der Komparatoren K1 oder K2 den Impulsgenerator IG2 in Betrieb hält, desto länger wird ein Blockiersignal erzeugt und der Schalttransistor Ts am Einschalten gehindert. Die Wiederholfrequenz der Energieaufnahmeimpulse hängt von dem Ausgang ab, dessen Ausgangsspannung zuerst den vorgegebenen Wert unterschreitet und somit am stärksten belastet ist. Der andere Ausgang läuft mit. Die Schaltmittel - Schaltmittel dritter Art - zur Feststellung, ob die Ausgangsspannung Ua2 des mitlaufenden Ausgangs einen vorgegebenen Wert über- oder unterschreitet, sind hier die Elemente R3, R4, K2, D3. Sobald der andere Ausgang jedoch stärker belastet wird, übernimmt dieser die Regelung und der erste Ausgang läuft mit.

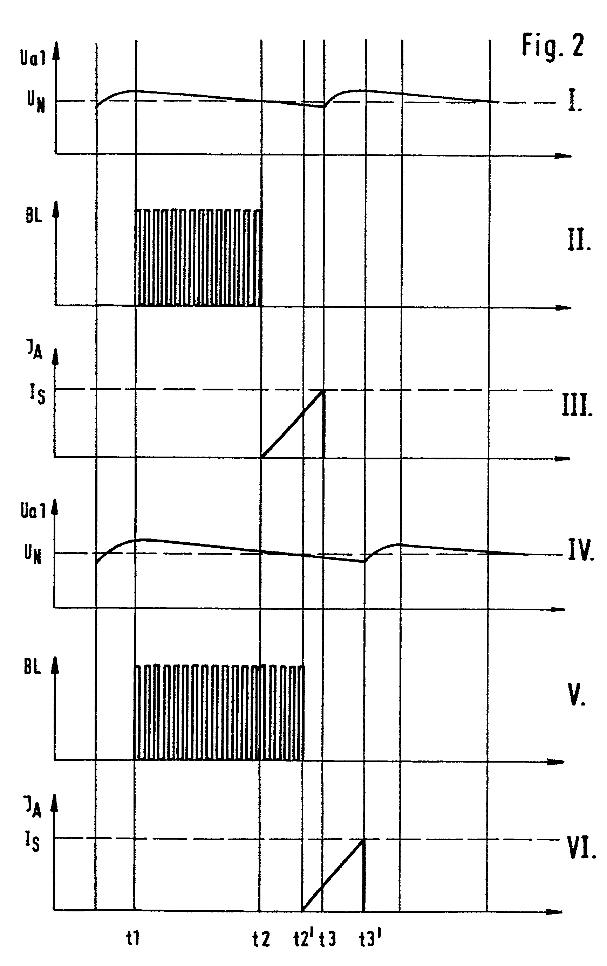

Die Belastungsabhängigkeit der Wiederholungsfrequenz der Energieaufnahmeimpulse ist in Fig. 2 für einen Ausgang, beispielsweise jener mit der Ausgangsspannung Ua1 dargestellt. Das I. Diagramm von Fig. 2 zeigt den zeitlichen Verlauf der Ausgangsspannung Ua1 und zwar für den Fall stärkerer Belastung. Die Ausgangsspannung Ua1 steigt zuerst steil an, überschreitet den vorgegebenen Schwellwert $U_N$ - bedingt durch das Aufladen des Glättungskondensators Cg1 - zum Zeitpunkt t1 und geht in eine Gerade mit vom angeschlossenen Lastwiderstand bestimmter Neigung über. Für die Dauer der Überschreitung des vorgegebenen Wertes $U_N$ (Zeitraum t1 bis t2) setzt der Komparator K1 den Impulsgenerator IG2 in Betrieb, dessen Blockierimpulse BL (Fig. 2, II. Diagramm) an den Impulsgenerator IG1 weitergeleitet werden. Sobald die vorgegebene Spannung $U_N$ wieder unterschritten wird, Zeitpunkt t2, kann der Energieaufnahmestrom $J_A$ (Fig. 2, III. Diagramm) wieder fließen. Die Energieaufnahme endet, wenn ein vorgegebener Spitzenstrom $I_S$ erreicht ist (Zeitpunkt t3), d.h. der Spannungsabfall am Strommeßwiderstand R1 seinen vorbestimmten Wert erreicht hat. Die Diagramme IV bis VI zeigen die zeitlichen Signalverläufe für den Fall schwächerer Belastung. Die Ausgangsspannung Ua1 geht nach Überschreiten der $U_N$-Schwelle in eine schwächer geneigte Gerade über und unterschreitet daher erst zum Zeitpunkt t2' diesen Wert. Die Blockierimpulse BL treten länger auf Wiederholungsfrequenz der Energieaufnahmestromimpulse $J_a$.

In einer realisierten Ausführung wurde ein Variationsbereich für die Wiederholungsfrequenz der Energieaufnahmestromimpulse Ja zwischen $f_{s\ min}$ ~ 150 Hz und $f_{s\ max}$ ~ 8,3 kHz erreicht. Bei Belastungsänderungen an einem Ausgang kommt es bei der erfindungsgemäßen Realisierung nur zu unwesentlichen Änderungen, da die Kopplung der Ausgänge nur über die beiden Sekundärwicklungen w2 und w3 erfolgt. Belastungsänderungen am geregelten Ausgang führen so zu Frequenzänderungen, daß die Spannung am geregelten Ausgang konstant bleibt und der andere Ausgang bei konstanter Last mitläuft. Es werden trotz der aus Gründen der schaltverlustgünstigeren Pulsfrequenzregelung die gleichen Mitlaufeigenschaften erzielt wie bei einem Gleichspannungswandler mit Konstantfrequenz und Pulsbreitenregelung.

## Ansprüche

1. Gleichspannungswandler, bestehend aus
   - mindestens einem geregelten und einem mitlaufenden Ausgang,
   - einem Transformator (Tr) und mindestens einem Schalttransistor (Ts) im Primärstromkreis dieses Transformators,
   - einem gesteuerten Impulsgenerator (IG1) zur Bestimmung des Ein- und Ausschaltens des/der Schalttransistor/en (Ts),
   - Schaltmittel erster Art (R1, R2, K1, IG2, Ü, T2, C1, R5) zur Beeinflussung der Frequenz des Impulsgenerators (IG1) in Abhängigkeit von der Höhe der Ausgangsspannung (Ua1) des Gleichspannungswandlers,
   - Schaltmitteln zweiter Art (R1, T1, T2) zur Beeinflussung der Abschaltung des primärstromkreisseitigen Energieaufnahmestromes, wenn dieser einen vorgegebenen Wert überschreitet, gekennzeichnet durch
   - Schaltmittel dritter Art (R3, R4, K2, D3) für mindestens einen mitlaufenden weiteren Ausgang des Wandlers zur Feststellung, ob dessen Ausgangsspannung (Ua2) einen vorgegebenen Wert über-/unterschreitet,
   - Verknüpfung der Schaltmittel erster und dritter Art derart, daß immer die Schaltmittel für jenen Ausgang die Frequenz des Impulsgenerators (IG1) bestimmen, dessen Ausgangsspannung (Ua1, Ua2) zuerst den jeweils vorgegebenen Wert erreicht.

2. Gleichspannungswandler nach Anspruch 1, dadurch gekennzeichnet, daß die Schaltmittel gebildet sind aus
   - Komparatoren (K1, K2), denen über Spannungsfühler (R2, R3, R4, R5) jeweils die Ausgangsspannung (Ua1, Ua2) eines Wandlerausgangs sowie eine Referenzspannung (Ur) zugeführt ist,
   - einem weiteren Impulsgenerator (IG2) konstanter Frequenz, der über ein Ausgangssignal einer der Komparatoren (K1, K2) ein- bzw. ausschaltbar ist,
   - einem Trennübertrager (Ü), dessen Primärwicklung (w4) an den Ausgang des weiteren Impulsgenerators (IG2) und dessen Sekundärwicklung (w5) über einen Schalttransistor (T3, T2) an den Steuereingang des Impulsgenerators (IG1) angeschlossen ist,
   - einem Strommeßwiderstand (R1) im primärseitigen Energieaufnahmestromkreis,

- einem an diesen Strommeßwiderstand (R1) angeschlossenen weiteren Schalttransistor (T1),
- einer Verknüpfung (T2) des weiteren Schalttransistors (T1) mit dem Steuereingang des Impulsgenerators (IG1).

## Claims

1. Direct voltage converter consisting of
   - at least one regulated and one following output,
   - a transformer (Tr) and at least one switching transistor (Ts) in the primary current circuit of this transformer,
   - a controlled pulse generator (IG1) for the determination of the switching on and off of the switching transistor or transistors (Ts),
   - circuit means of first kind (R1, R2, K1, IG2, Ü, T2, C1, R5) for influencing the frequency of the pulse generator (IG1) in dependence on the height of the output voltage (Ua1) of the direct voltage converter,
   - circuit means of second kind (R1, T1, T2) for influencing the switching-off of the primary energy intake current when this exceeds a predetermined value, characterised by
   - circuit means of third kind (R3, R4, K2, D3) for at least one following further output of the converter for ascertaining whether its output voltage (Ua2) exceeds or falls below a preset value and
   - interlinking of the circuit means of first and third kind in such a manner that the circuit means determine the frequency of the pulse generator (IG1) always for that output, the output voltage (Ua1, Ua2) of which first reaches the respectively preset value.

2. Direct voltage converter according to claim 1, characterised thereby, that the circuit means are formed of
   - comparators (K1, K2), to each of which a respective output voltage (Ua1, Ua2) of a converter output as well as a reference voltage (Ur) is fed by way of voltage sensors (R2, R3, R4, R5),
   - a further pulse generator (IG2) of constant frequency and switchable on and off by an output signal of one of the comparators (K1, K2),
   - an isolating transformer (Ü), the primary winding (w4) of which is connected to the output of the further pulse generator (IG2) and the secondary winding (w5) of which is connected to the control input of the pulse generator (IG1),
   - a current-measuring resistor (R1) in the primary energy intake current circuit,
   - a further switching transistor (T1) connected to this current-measuring resistor (R1) and
   - an interlinking (T2) of the further switching transistor (T1) with the control input of the pulse generator (IG1).

## Revendications

1. Convertisseur de tension continu-continu comprenant
   - au moins une sortie régulée et une sortie suiveuse,
   - un transformateur (Tr) et au moins un transistor de commutation (Ts) dans le circuit primaire de ce transformateur,
   - un générateur d'impulsions (IG1) commandé pour determiner la mise en conduction et le blocage du ou des transistors de commutation (Ts),
   - des moyens de connexion d'une première catégorie (R1, R2, K1, IG2, Ü, T2, C1, R5) pour influencer la fréquence du générateur d'impulsions (IG1) en fonction de l'amplitude de la tension de sortie (Ua1) du convertisseur continu-continu,
   - des moyens de connexion d'une deuxième catégorie (R1, T1, T2) pour influencer la coupure du courant d'absorption d'énergie dans le circuit primaire lorsque ce courant dépasse une valeur préfixée, caractérisé en ce que
   - il comprend des moyens de connexion d'une troisième catégorie (R3, R4, K2, D3) pour au moins une autre sortie suiveuse du convertisseur afin de déterminer si sa tension de sortie (Ua2) dépasse ou est inférieure à une valeur préfixée, et
   - les moyens de connexion de la première et de la troisième catégorie sont interconnectés de manière que la fréquence du générateur d'impulsions (IG1) soit toujours fixée par les moyens de connexion pour la sortie dont la tension de sortie (Ua1, Ua2) atteint en premier la valeur préfixée.

2. Convertisseur de tension continu-continu selon la revendication 1, caractérisé en ce que les moyens de connexion sont constitués de
   - comparateurs (K1, K2), à chacun desquels sont appliquées, à travers des détecteurs de tension (R2, R3, R4, R5), la tension de sortie (Ua1, Ua2) d'une sortie du convertisseur ainsi qu'une tension de référence (Ur),
- un générateur d'impulsions (IG2) supplémentaire, de fréquence constante, qui peut être enclenché et arrêté par un signal de sortie d'un des comparateurs (K1, K2),
- un transformateur d'isolement (Ü) dont l'enroulement primaire (w4) est connecté à la sortie du générateur d'impulsions (IG2) supplémentaire et dont l'enroulement secondaire (w5) est raccordé à travers un transistor de commutation (T3, T2) à l'entrée de commande du générateur d'impulsions (IG1),
- une résistance de mesure de courant (R1) dans le circuit du courant d'absorption d'énergie côté primaire,
- un transistor de commutation (T1) supplémentaire connecté à cette résistance de mesure de courant (R1) et
- une connexion (T2) du transistor de commutation (T1) supplémentaire à l'entrée de commande du générateur d'impulsions (IG1).

Fig. 1

Fig. 2